# EUROPÄISCHE PATENTSCHRIFT

(11) **EP 2 731 804 B1**
(45) Veröffentlichungstag und Bekanntmachung des Hinweises auf die Patenterteilung: **13.01.2016**
(21) Anmeldenummer: 12748642.1
(22) Anmeldetag: 13.07.2012
(51) Int. Cl.: B44C 1/00, C08J 7/04

(54) **FLÄCHIGER TRÄGER UND EIN VERFAHREN ZUR HERSTELLUNG EINES FLÄCHIGEN TRÄGERS**
PLANAR CARRIER AND A METHOD FOR PRODUCING A PLANAR CARRIER
SUPPORT PLAN ET PROCÉDÉ DE PRODUCTION D'UN SUPPORT PLAN

(30) Priorität: 15.07.2011 AT 10422011
(43) Veröffentlichungstag der Anmeldung: 21.05.2014
(73) Patentinhaber: Hueck Folien Gesellschaft m.b.H., 4342 Baumgartenberg (AT)
(72) Erfinder: AIGNER, Georg, A-4363 Pabneukirchen (AT); HILBURGER, Johann, 92712 Pirk (DE)
(74) Vertreter: Jell, Friedrich
(86) Internationale Anmeldenummer: PCT/AT2012/050104
(87) Internationale Veröffentlichungsnummer: WO 2013/010201

(56) Entgegenhaltungen:
- EP-A1- 1 785 268

## Beschreibung

### Technisches Gebiet

Die Erfindung betrifft ein Verfahren zur Herstellung eines flächigen Trägers und einen flächigen Träger und, insbesondere eine Dekorbahn, zum Aufbringen auf einen Gegenstand, aufweisend eine polymere Trägerschicht und eine mit der Trägerschicht verbundene polymere Lackschicht, die eine mit Hilfe einer Umkehrbeschichtung insbesondere auf Trennpapier wenigstens teilweise geprägte Fläche aufweist.

### Stand der Technik

Aus dem Stand der Technik (DE 102008 034479) sind Materialbahnen bekannt, die aus einer Lackschicht bestehen, die mit einem vernetzenden Material, insbesondere aus einem Polyurethan-Material bzw. zusätzlich noch mit einem Vliesstoff versehen werden. Der verwendete Lack und das vernetzende Material werden dazu durch Einbringung von Wärme über Heizeinrichtungen ausgehärtet. Zudem ist eine Ablüftungseinrichtung vorgesehen, um das Aushärten bzw. Trocknen der Lackschicht weiter zu beschleunigen und die, sich im Zuge der Aushärtung entwickelnden Dämpfe umweltschonend einzufangen. Außerdem weist die Lackschicht eine durch eine Umkehrbeschichtung auf Trennpapier geschaffene geprägte Oberfläche auf. Nachteilig ist unter anderem, dass derartig hergestellte Materialbahnen bzw. flächige Träger nur aus ganz bestimmten Lacken - insbesondere wärmehärtenden Lacken - bzw. vernetzenden Materialien hergestellt werden können. Des Weiteren sind, auf eine Lackschicht aufgebrachte, vernetzende Materialien - insbesondere Polyurethan - auch nachteilig hinsichtlich Ihrer mechanischen Eigenschaften, weshalb im Stand der Technik in einem weiteren Verfahrensschritt ein Vliesstoff auf die Polyurethanschicht aufgebracht werden muss. Des Weiteren ist dieses Herstellungsverfahren vergleichsweise fehleranfällig, weil die Aushärtungsgrade von Lack und vernetzendem Material exakt eingehalten werden müssen - etwa um die Herstellung einer konstant dicken Lackschicht gewährleisten zu können. Eine standfeste Dekorbahn zum Aufbringen auf einen Gegenstand bzw. ein einfaches Verfahren zur Herstellung solch einer Dekorbahn kann auf diese Weise nicht ermöglich werden.

Zudem ist aus dem Stand der Technik (EP 1 785 268 A1) eine Dekorfolie bekannt, die auf einem Träger aufgebracht werden kann. Diese Dekorfolie besteht aus einer polymere Trägerfolie, die mit einer metallischen Schicht und/oder einer Bedruckung und mindestens einer Schutzlacklackschicht versehen ist.

### Darstellung der Erfindung

Die Erfindung hat sich daher die Aufgabe gestellt, einen flächigen Träger der eingangs geschilderten Art derart zu verbessern, dass dieser besonders widerstandsfähig, insbesondere gegenüber chemischen und/oder mechanischen Belastungen, ist, trotzdem aber mit einem Gegenstand bzw. einem Untergrund standfest verbindbar ist, um diesen beispielsweise zu schützen und/oder optisch zu veredeln.

Die Erfindung löst die gestellte Aufgabe dadurch, dass die, als Trägerfolie ausgebildete Trägerschicht eine gegenüber der, aus einem strahlenhärtenden duroplastischen Polymer, insbesondere UV-Lack, bestehenden Lackschicht höhere elastische Eigenschaft zur zumindest teilweisen Reduktion von mechanischen Spannungen aufweist.

Weist die, als Trägerfolie ausgebildete Trägerschicht eine gegenüber der, aus einem strahlenhärtenden duroplastischen Polymer bestehenden Lackschicht höhere elastische Eigenschaft auf, so kann diese elastische Eigenschaft genützt werden, eventuelle mechanischen Spannungen von der vergleichsweise harten polymeren Lackschicht fern zu halten, so dass diese davon entkoppelt und somit geschützt werden kann. Der erfindungsgemäße flächige Träger bzw. die Dekorbahn bzw. die Dekorfolie kann daher im Gegensatz zum Stand der Technik ermöglichen, dass eine, aus strahlenhärtendem duroplastischem Polymer bestehende Lackschicht, welche nach Aushärtung ihre Form nicht oder nur in äußerst geringem Ausmaß verändern bzw. auf mechanische Einflüsse, insbesondere Spannungen, beispielsweise mit Bildung von Rissen oder Sprüngen reagieret, mit jeglichem Gegenstand bzw. Untergrund bedenkenlos verbunden werden kann. Flexible Anwendungsmöglichkeiten solch eines Trägers können sich somit eröffnen - vorstellbar sind beispielsweise biegeweiche Scheckkarten bis hin zu starren Möbeloberflächen. Trotzdem ermöglicht der flächige Träger durch seine besondere Lackschicht aber hohe Widerstandsfähigkeit, insbesondere gegenüber chemischen und/oder mechanischen Belastungen - wie beispielsweise Kratzfestigkeit-, sodass der damit versehene Gegenstand bzw. Untergrund verbessert geschützt werden können. Bevorzugt hat sich als solch eine schützende Schicht ein UV-Lack herausgestellt, wobei sich hierfür besonders ein radikalisch härtender UV-Lack eignen kann. UV-Lack hat sich insbesondere deshalb aus vorheilhaft herausgestellt, weil die Aushärtung von UV-Lack durch gezielte Bestrahlung besonders leicht steuerbar ist - beispielsweise auch sehr schnell erfolgen kann - und zusätzlich auch bei besserer Oberflächenqualität aushärtet. Zudem sind UV-Lacke aufgrund ihrer Lösungsmittelfreiheit nicht nur besonders umweltschonend, sondern auch hinsichtlich gesundheitlicher Aspekte unbedenklich. Die Erfindung kann daher einen besonders widerstandsfähigen und leicht zu verarbeitenden flächigen Träger ermöglichen, der universell an verschiedensten Gegenständen bzw. Untergründen standfest befestigt werden kann.

Ein besonders widerstandsfähiger flächiger Träger kann hergestellt werden, wenn die Lackschicht eine Acryl-, Alkyl-, Epoxid-, Polyester- oder Polyurethanbasis aufweist. Dadurch kann nämlich eine verbesserte Vernetzung des Lacks und somit eine besonders stark Lackschicht ermöglicht werden.

Ist die Lackschicht über einen Kaschierkleber mit der Trägerfolie stoffschlüssig verbunden, kann auf einfache Weise eine besonders gute Verbindung hergestellt werden, die durch eine Dauerflexibilität des Kaschierklebers eine standhafte Verbindung selbst bei starker mechanischer Belastung gewährleisten kann. Zudem kann ein Kaschierkleber durch den Vorteil einer optischen Transparenz und damit einer geringen optischen Wahrnehmung bieten.

Schließt die Lackschicht an die Trägerfolie stoffschlüssig an, ist nicht nur ein besonders konstruktiv einfacher Träger schaffbar, sondern es können dadurch auch optische Beeinträchtigungen vergleichsweise gering gehalten werden.

Bildet die Lackschicht mit seiner geprägten Fläche eine Oberfläche des flächigen Trägers aus, kann die Wahrnehmung der Prägung nicht nur optisch erfolgen, sondern vorteilhaft auch ertastet bzw. haptisch wahrgenommen werden.

Ist die Lackschicht mit seiner geprägten Fläche gegen eine Abdeckfolie kaschiert, kann zwar eine haptische Wahrnehmung der Prägung nicht mehr gewährleistet werden, der flächige Träger kann damit aber dennoch eine optische Wahrnehmung der Prägung schaffen. Liegt die Tiefe der Prägung der Lackschicht beispielsweise in einem Bereich von bis zu mehreren hundert Mikrometern, kann insbesondere ein dreidimensionaler Effekt entstehen, wenn die Grenzfläche zwischen einer geprägten Lackschicht und einer weiteren Schicht, etwa einer Metallschicht oder einer weiteren Lackschicht, hindurch betrachtet wird. Außerdem kann sich dadurch die Möglichkeit eröffnen, zwischen Abdeckfolie und Lackschicht Funktionselemente vorzusehen. Ein in seiner Ausführung und Anwendung besonders variabel und flexibel verwendbarer Träger kann so geschaffen werden.

Um eine verbesserte Wahrnehmung der Prägung der Lackschicht zu ermöglichen, kann die Lackschicht auf seiner geprägten Fläche und/oder seiner ungeprägten Fläche wenigstens teilweise eine Schicht aus einem Metall, einer Metalllegierung oder einer Metallverbindung aufweisen.

Einfache Verbindungsmöglichkeiten mit einem Gegenstand bzw. einem Untergrund können sich ergeben, wenn auf der, der Lackschicht abgewendeten Seite der Trägerfolie eine Selbstklebe-, Heißsiegel- oder Kaltsiegelbeschichtung aufgebracht ist.

Sind wenigstens bereichsweise zwischen der Lackschicht und der Trägerfolie Effektpigmente vorgesehen, können unter anderem optische Eigenschaften, wie beispielsweise winkelabhängige Farbton- und Glanzänderungen oder Texturen, ermöglicht werden. Vorteilhaft kann die Trägerfolie somit in zahlreichen Anwendungsbereichen Verwendung finden. So ist es etwa denkbar, mithilfe des erfindungsgemäßen flächigen Trägers auch Hologramme herzustellen.

Die Erfindung hat sich weiter die Aufgabe gestellt, ein Verfahren zur Herstellung eines flächigen Trägers der eingangs geschilderten Art derart zu verbessern, dass dieses einfach, standfest und umweltschonend ausführbar ist.

Die Erfindung löst die gestellte Aufgabe dadurch, dass eine, aus einem strahlenhärtenden duroplastischen Polymer bestehende Lackschicht auf das Trennpapier aufgebracht und einer vollständigen Aushärtung mit Hilfe von UV- oder Elektronenstrahlung unterworfen wird und die Lackschicht nach ihrer Aushärtung mit einer als Trägerfolie ausgebildeten Trägerschicht verbunden wird.

Wird eine, aus einem strahlenhärtenden duroplastischen Polymer bestehende Lackschicht auf das Trennpapier aufgebracht und einer vollständigen Aushärtung mit Hilfe von UV- oder Elektronenstrahlung unterworfen, dann kann unter anderem sichergestellt werden, dass ein besonders widerstandsfähiger flächiger Träger geschaffen wird. Zudem können auch Beeinträchtigungen hinsichtlich der optischen Eigenschaften vermindert werden, wenn eine derartige Lackschicht weiter verarbeitet wird. Die Lackschicht wird nämlich erst nach ihrer Aushärtung mit einer als Trägerfolie ausgebildeten Trägerschicht verbunden, sodass verhindert werden kann, dass sich chemische und/oder mechanische Prozessparameter, die im Zuge eines Aushärtens der Lackschicht bzw. eines Verbindens der Lackschicht mit der Trägerfolie auftreten, gegenseitig beeinflussen. Das erfindungsgemäße Verfahren kann daher mit engen Prozessparametern standfest reproduzierbar einen besonders robusten flächigen Träger schaffen. Zusätzlich kann auch noch, falls erwünscht, eine Bearbeitung der, der Trägerschicht zugewandten Seite der Lackschicht erfolgen, beispielsweise um diese einzufärben. Zudem kann die Trägerfolie derart ausgebildet sein, dass der flächige Träger weiter bearbeitet werden kann, ohne dass die Trägerschicht mit einer zusätzlichen weiteren Schicht verbunden werden muss bzw. solch eine weitere Schicht benötigt wird. Zudem kann eine, aus einem strahlenhärtenden duroplastischen Polymer bestehende Lackschicht, insbesondere eine UV-Lackschicht besonders umweltschonende Produktionsbedingungen ermöglichen, unter anderem deshalb, weil sie frei von Lösungsmitteln sein können bzw. weil für ein Aushärten keine Zufuhr von Wärme erforderlich ist. Es kann daher nicht nur ein einfaches und standfestes, sondern auch ein umweltschonendes Verfahren ermöglicht werden.

Wird die geprägte Lackschicht auf der rückseitigen, ungeprägten Fläche wenigstens teilweise mit einem Metall, einer Metalllegierung oder -verbindung beschichtet, dann kann damit eine besondere Trennschicht zwischen der Lackschicht und dem weiteren rückseitigen Aufbau des flächigen Trägers geschaffen werden, wodurch sich die Möglichkeit ergeben kann, zusätzliche optische Effekte des flächigen Trägers zu erzielen - beispielsweise ein metallischer Glanz des flächigen Trägers. Vorteilhaft kann vor diesem Beschichten der Lackschicht ein Primer (Haftvermittler) auf die Lackschicht aufgetragen werden.

Wird die Lackschicht mit seiner geprägten Seite gegen eine Abdeckfolie kaschiert oder laminiert, kann ein optischer Eindruck von Tiefe erreicht werden und/oder erhalten bleiben. Zudem kann durch eine Glättung der Prägung zugleich eine Verarbeitung einer vergleichsweise harten Lackschicht auf seiner geprägten Seite erleichtert werden.

Für einfache Handhabungsverhältnisse des flächigen Trägers, etwa um den Träger mit einem Substrat oder einem Objekt zu verbinden, kann das Verfahren noch vorsehen, dass auf dem flächigen Träger eine Selbstklebe-, Heißsiegel- oder Kaltsiegelbeschichtung aufgebracht wird.

Des Weiteren sei erwähnt, dass als polymere Trägerfolien beispielsweise Kunststofffolien, beispielsweise aus PI, 35 PP, MOPP, PE, PPS, PEEK, PEK, PEI, PSU, PAEK, LCP, PEN, PBT, PET, PA, PMMA, PC, COC, POM, ABS, PVC in Frage kommen. Zur Aufbringung eines UV-Lacks auf ein geprägtes Dekorpapier sind unter anderem auch Tiefdruck, Siebdruck, Flexodruck, Digitaldruck, Curtain Coating und dergleichen möglich. Als metallische Beschichtung kommen beispielsweise Al, Cu, Ag, Au, Ni, Cr, Pt, Pd, Sn, Zn, Co, Fe, In in Frage. Ferner können als metallische Beschichtung auch Legierungen, Metallgemische oder Metallverbindungen, wie Oxide, Chromate oder Sulfide aufgebracht werden. Geeignet sind beispielsweise Cu/Al- oder Al/Cr- Legierungen, oder Metallverbindungen, insbesondere Ti02, Cr-Oxide, ZnS, ITO, Bi-Oxid, ATO, FTO, ZnO, Al203, Zn-Chromat, Fe-Oxide, CuO und dergleichen. Die metallische Beschichtung kann beispielsweise mittels eines PVD oder CVD-Verfahrens aufgebacht werden, möglich ist aber auch die Aufbringung aus einem flüssigen Medium. Ferner kann die metallische Beschichtung durch Kaschieren mit einer Metallfolie, beispielsweise durch Heißkaschieren oder IR-gestützt unter Verwendung homologer Kleber aufgebracht werden. Zur Erhöhung der mechanischen Beständigkeit, beispielsweise der Abriebbeständigkeit, der Scher- und Dehnungssicherheit, der Walzfestigkeit und dergleichen können vorzugsweise elastomere Modifikatoren, beispielsweise elastomere Polymere und Copolymere, wie EPR oder Nanopartikel und dergleichen zugegeben werden.

Durch die erfindungsgemäße standfeste Ausgestaltung des flächigen Trägers kann sich dieser besonders als dekorative Etikette, Sicherheitsetikette oder Dekorfolie für Möbeloberflächen, Metall- oder Kunststoffteile eignen.

### Kurze Beschreibung der Zeichnung

In den Figuren ist beispielsweise der Erfindungsgegenstand anhand von mehreren Ausführungsbeispielen dargestellt. Es zeigen
- Fig. 1: eine Schnittansicht durch einen flächigen Träger.
- Fig. 2: eine alternative Ausführung zum, nach Fig. 1 dargestellten flächigen Träger,
- Fig. 3: ein weiteres Ausführungsbeispiel zu einem flächigen Träger und
- Fig. 4: eine Darstellung zu einem Herstellungsverfahren des flächigen Trägers nach Fig. 1.

### Weg zur Ausführung der Erfindung

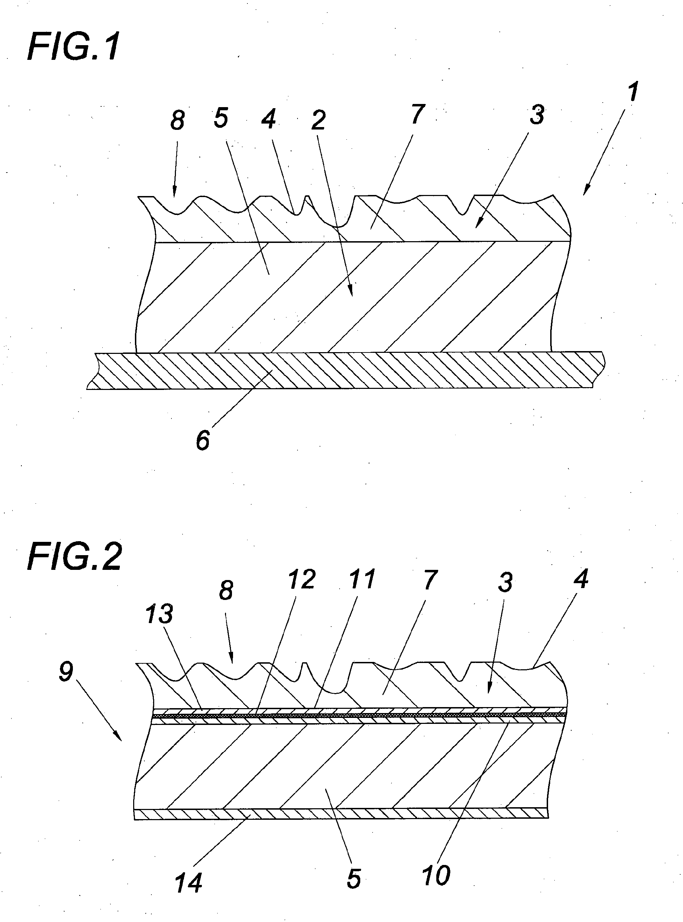

Der nach Fig. 1 darstellte flächige Träger 1 weist eine polymere Trägerschicht 2 und eine mit der Trägerschicht 2 verbundene, polymere Lackschicht 3 auf. In diese Lackschicht 3 wurde eine Prägung einer geprägten Fläche 4 eingebracht, was mit Hilfe einer aus Umkehrverfahren bekannten Umkehrbeschichtung auf Trennpapier 20 erreicht wird. Da erfindungsgemäß ein strahlenhärtendes duroplastisches Polymer für die Lackschicht 3 verwendet worden ist, ist die Lackschicht zwar vergleichsweise hart, jedoch gegenüber mechanischen Spannungen vergleichsweise empfindlich - vor allem spröde. Zu diesem Zweck wird nun eine als Trägerfolie 5 ausgebildete Trägerschicht 2 verwendet, die eine gegenüber der Lackschicht 3 höhere elastische Eigenschaft aufweist. Daher können wenigstens von der Trägerfolie 5 mechanische Spannungen, beispielsweise verursacht durch thermisch bedingte Bewegungen eines mit dem flächigen Träger 1 verbundenen Gegenstands 6, aufgenommen und abgetragen werden. Die Lackschicht 3 kann so vorteilhaft geschützt werden, wodurch ein standfester flächiger Träger 1 geschaffen werden kann. Gegenüber dem Stand der Technik kann so auf konstruktiv einfache Weise ein besonders robuster flächiger Träger 1 bzw. Dekorfolie geschaffen werden, der bzw. die nicht nur den Gegenstand 6 schützt, sondern auch eine standfeste Verbindung mit diesem Gegenstand 6 gewährleisten kann. Eine hervorragende Widerstandsfähigkeit kann sich durch eine Verwendung eines UV-Lacks 7 als Lackschicht 3 ergeben. Lackschichten 3 auf Acryl-, Alkyl-, Epoxid-, Polyester- oder Polyurethanbasis sind weiter vorstellbar. In diesem Ausführungsbeispiel nach Fig. 1 sind Lackschicht 3 und Trägerfolie 5 stoffschlüssig miteinander verbunden, wodurch einfache Konstruktionsverhältnisse geschaffen werden können.

Wie weiter der Fig. 1 zu entnehmen ist, bildet die Lackschicht 3 mit seiner geprägten Fläche 4 die Oberfläche 8 des flächigen Trägers aus. Das Relief der geprägten Fläche 4 ist daher haptisch fühlbar.

Weiter ist nach Fig. 2 in einer Ausführung eines flächigen Trägers 9 zu erkennen, dass auf der ungeprägten Fläche 11 der Lackschicht 3 bzw. auf seiner, der geprägten Fläche 4 gegenüberliegenden Fläche 11 eine Metallschicht 12 vorgesehen ist. Es können aber auch zwischen der Lackschicht 3 und Trägerfolie 5 Effektpigmente vorgesehen sein, die nicht näher dargestellt worden sind.

Vorteilhaft für Haftungszwecke kann zwischen der Metallschicht 12 und der Lackschicht 3 noch ein Primer 13 sowie zwischen der Metallschicht 12 und der Trägerfolie 5 ein Kaschierkleber 10 vorgesehen sein.

Außerdem ist für einfache Montagezwecke auf der, der Lackschicht 3 abgewandten Seite der Trägerfolie 5 eine Selbstklebebeschichtung 14 aufgebracht.

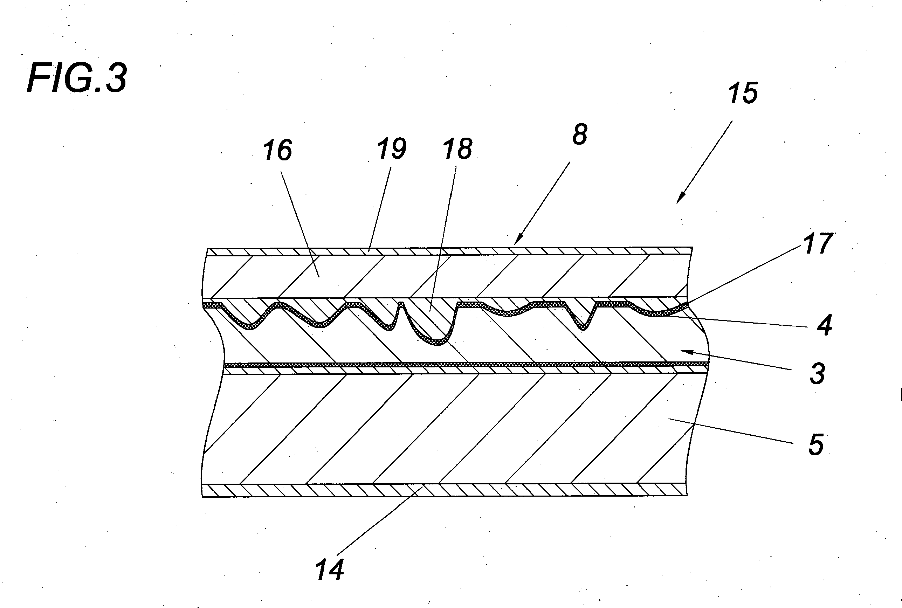

Nach Fig. 3 wird eine weitere Ausführungsform zu einem flächigen Träger 15 gezeigt. Hier ist die Lackschicht 3 mit seiner geprägten Fläche 4 gegen eine Abdeckfolie 16 kaschiert oder laminiert. Ebenso kann auf der geprägten Seite 4 der Lackschicht 3 eine weitere Metallisierung 17 vorgesehen sein, die über einen Kaschierkleber 18 mit der Abdeckfolie 16 einen Verbund bildet. Für verbesserte Weiterverarbeitungszwecke, insbesondere für einen eventuellen Bedruck des flächigen Trägers 1 ist auf der Abdeckfolie 16 noch ein Druckprimer 19 vorgesehen, der unter anderem auch eine glatte Oberfläche des flächigen Trägers 1 ermöglicht. Der Aufbau unterhalb der Lackschicht 3 kann gleich dem, in Fig. 2 gezeigten Aufbau sein, wobei auf einen Kaschierkleber 10, wie in Fig. 2 dargestellt, auch verzichtet werden kann.

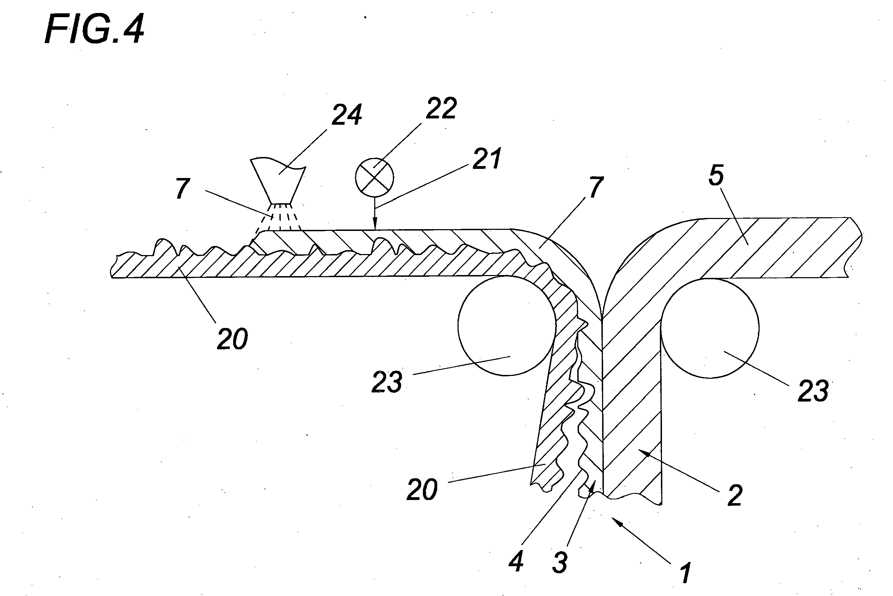

Nach Fig. 4 wird beispielsweise ein Verfahren zur Herstellung des flächigen Trägers 1 nach der Fig. 1 gezeigt. Um eine geprägte Fläche 4 auf dem flächigen Träger 1 zu schaffen, wird ein von Umkehrverfahren bzw. Transferbeschichtungen bekanntes Trennpapier 20 verwendet. Die Oberfläche des Trennpapiers 20 dient somit als Negativ für die Narbung bzw. Negativnarbung der geprägten Fläche 4. Auf das geprägte Trennpapier 20 wird eine polymere Lackschicht 3 vollflächig aufgebracht, indem eine Düse 24 flüssigen UV-Lack 7 auf das Trennpapier 20 aufsprüht. Der Lack 7 wird dann mit Hilfe von UV-Strahlung 21 einer Lampe 22 vollständig ausgehärtet. Nach dieser Aushärtung wird die Lackschicht 3 mit einer als Trägerfolie 5 ausgebildeten Trägerschicht 2 verbunden, indem Trennpapier 20, Lackschicht 3 und Trägerfolie 5 durch gegeneinander verspannte Walzen 23 geführt wird. Die Verbindung zwischen Lackschicht 3 und Trägerfolie 5 kann beispielsweise auch durch Verwendung eines Kaschierklebers, der hier nicht näher dargestellt worden ist, hergestellt werden. Nach dem festen und/oder stoffschlüssigen Verbund zwischen Lackschicht 3 und Trägerfolie 5 wird das Trennpapier 20 eventuell abgezogen. Dieses Abziehen des Trennpapiers 20 kann auch im Zuge eines Umkehrverfahrens erfolgen, bei dem der flächige Träger 1 verwendet wird, um so beispielsweise ein Applikationsverfahren zu erfüllen.

Eine vergleichsweise kratzfeste Beschichtung durch eine aus einem strahlenhärtenden duroplastischen Polymer bestehende Lackschicht 3 kann so mit einer Trägerfolie 5 standfest verbunden werden, welcher flächige Träger 1 sich außerdem durch eine geprägte Fläche 4 auszeichnen kann.

## Patentansprüche

1. Flächiger Träger, insbesondere Dekorbahn, zum Aufbringen auf einen Gegenstand (6), aufweisend eine polymere Trägerschicht (2) und eine mit der Trägerschicht (2) verbundene polymere Lackschicht (3), die eine mit Hilfe einer Umkehrbeschichtung insbesondere auf Trennpapier (20) wenigstens teilweise geprägte Fläche (4) aufweist, **dadurch gekennzeichnet, dass** die, als Trägerfolie (5) ausgebildete Trägerschicht (2) eine gegenüber der, aus einem strahlenhärtenden duroplastischen Polymer, insbesondere UV-Lack (7), bestehenden Lackschicht (3) höhere elastische Eigenschaft zur zumindest teilweisen Reduktion von mechanischen Spannungen aufweist.

2. Flächiger Träger nach Anspruch 1, **dadurch gekennzeichnet, dass** die Lackschicht (3) eine Acryl-, Alkyl-, Epoxid-, Polyester- oder Polyurethanbasis aufweist.

3. Flächiger Träger nach Anspruch 1 oder 2, **dadurch gekennzeichnet, dass** die Lackschicht (3) über einen Kaschierkleber (10) mit der Trägerfolie (5) stoffschlüssig verbunden ist.

4. Flächiger Träger nach Anspruch 1 oder 2, **dadurch gekennzeichnet, dass** die Lackschicht (3) an die Trägerfolie (5) stoffschlüssig anschließt.

5. Flächiger Träger nach einem der Ansprüche 1 bis 4, **dadurch gekennzeichnet, dass** die Lackschicht (3) mit seiner geprägten Fläche (4) eine Oberfläche (8) des flächigen Trägers (1, 9) ausbildet.

6. Flächiger Träger nach einem der Ansprüche 1 bis 4, **dadurch gekennzeichnet, dass** die Lackschicht (3) mit seiner geprägten Fläche (4) gegen eine Abdeckfolie (16) kaschiert ist.

7. Flächiger Träger nach einem der Ansprüche 1 bis 6, **dadurch gekennzeichnet, dass** die Lackschicht (3) auf seiner geprägten Fläche (4) und/oder seiner ungeprägten Fläche (11) wenigstens teilweise eine Schicht (12) aus einem Metall, einer Metalllegierung oder einer Metallverbindung aufweist.

8. Flächiger Träger nach einem der Ansprüche 1 bis 7, **dadurch gekennzeichnet, dass** auf der, der Lackschicht (3) abgewendeten Seite der Trägerfolie (5) eine Selbstklebe-, Heißsiegel- oder Kaltsiegelbeschichtung (14) aufgebracht ist.

9. Flächiger Träger nach einem der vorhergehenden Ansprüche, **dadurch gekennzeichnet, dass** wenigstens bereichsweise zwischen der Lackschicht (3) und der Trägerfolie (5) Effektpigmente vorgesehen sind.

10. Verfahren zur Herstellung eines flächigen Trägers (1, 9, 15), insbesondere einer Dekorbahn, nach einem der Ansprüche 1 bis 9, bei dem auf ein geprägtes Trennpapier (20) eine polymere Lackschicht (3) vollflächig oder partiell aufgebracht und ausgehärtet wird, die damit geprägte Lackschicht (3) mit einer Trägerschicht (2) verbunden wird und das Trennpapier vom flächigen Träger (1, 9, 15) eventuell abgezogen wird, **dadurch gekennzeichnet, dass** eine, aus einem strahlenhärtenden duroplastischen Polymer bestehende Lackschicht (3) auf das Trennpapier (20) aufgebracht und einer vollständigen Aushärtung mit Hilfe von UV- oder Elektronenstrahlung unterworfen wird und die Lackschicht (3) nach ihrer Aushärtung mit einer als Trägerfolie (5) ausgebildeten Trägerschicht (2) verbunden wird.

11. Verfahren nach Anspruch 10, **dadurch gekennzeichnet, dass** die geprägte Lackschicht (3) auf der rückseitigen, ungeprägten Fläche (11) wenigstens teilweise mit einem Metall, einer Metalllegierung oder -verbindung beschichtet wird.

12. Verfahren nach Anspruch 10 oder 11, **dadurch gekennzeichnet, dass** die Lackschicht (3) mit seiner geprägten Fläche (4) gegen eine Abdeckfolie (16) kaschiert oder laminiert wird.

13. Verfahren nach Anspruch 10, 11 oder 12, **dadurch gekennzeichnet, dass** auf den flächigen Träger (9, 15) eine Selbstklebe-, Heißsiegel- oder Kaltsiegelbeschichtung (14) aufgebracht wird.

14. Verwendung eines flächigen Trägers (1, 9, 15) gemäß einem der Ansprüche 1 bis 9 als dekorative Etikette, Sicherheitsetikette oder Dekorfolie für Möbeloberflächen, Metall- oder Kunststoffteile.

## Claims

1. A planar carrier, especially a decorative strip, for applying to an object (6), comprising a polymeric carrier layer (2) and a polymeric coating layer (3) which is connected to the carrier layer (2) which has a surface (4) at least partially imprinted by means of a reverse coating more particularly on release paper (20), **characterized in that** the carrier layer (2), which is formed as a carrier film (5), has a higher elastic property than the coating layer (3), which consists of a radiation-curable duroplastic polymer, more particularly UV lacquer (7), in order to at least partially reduce mechanical stresses.

2. A planar carrier according to claim 1, **characterized in that** the coating layer (3) has an acrylic, alkyl, epoxy, polyester or polyurethane base.

3. A planar carrier according to claim 1 or 2, **characterized in that** the coating layer (3) is materially connected to the carrier film (5) via a laminating adhesive (10).

4. A planar carrier according to claim 1 or 2, **characterized in that** the coating layer (3) is materially bonded to the carrier film (5).

5. A planar carrier according to one of the claims 1 to 4, **characterized in that** the coating layer (3) with its imprinted surface (4) forms a surface (8) of the planar carrier (1, 9).

6. A planar carrier according to one of the claims 1 to 4, **characterized in that** the coating layer (3) is laminated with its imprinted surface (4) against a cover film (16).

7. A planar carrier according to one of the claims 1 to 6, **characterized in that** the coating layer (3) comprises at least partly on its imprinted surface (4) and/or its non-imprinted surface (11) a layer (12) made of a metal, of a metal alloy or of a metal compound.

8. A planar carrier according to one of the claims 1 to 7, **characterized in that** a self-adhesive, heat-sealing or cold-sealing coating (14) is applied to the side of the carrier film (5) facing away from the coating layer (3).

9. A planar carrier according to one of the preceding claims, **characterized in that** effect pigments are provided at least in sections between the coating layer (3) and the carrier film (5).

10. Method for producing a planar carrier (1, 9, 15), more particularly a decorative strip, according to one of the claims 1 to 9, in which a polymer coating layer (3) is applied to and cured on an imprinted release paper (20) over the entire area or partially, the thus imprinted coating layer (3) is connected to a carrier layer (2), and the release paper is optionally withdrawn from the planar carrier (1, 9, 15), **characterized in that** a coating layer consisting of a radiation-curable duroplastic polymer is applied to the release paper (20) and is subjected to complete curing by means of UV or electron radiation, and the coating layer (3) is connected after its curing to a carrier layer (2) configured as a carrier film (5).

11. Method according to claim 10, **characterized in that** the imprinted coating layer (3) is coated on the rear non-imprinted surface (11) at least partly by a metal, a metal alloy or metal compound.

12. Method according to claim 10 or 11, **characterized in that** the coating layer (3) is coated or laminated with its imprinted surface (4) against a cover film (16).

13. A method according to claim 10, 11 or 12, **characterized in that** a self-adhesive, hot-sealing or cold-sealing coating (14) is applied to the planar carrier (9, 15).

14. Use of a planar carrier (1, 9, 15) according to one of the claims 1 to 9 as decorative label, a security label or decorative film for surfaces of furniture, metal or plastic parts.

## Revendications

1. Support plat, en particulier lé décoratif, à appliquer sur un objet (6), présentant une couche de support en polymère (2) et une couche de vernis polymère (3) liée à la couche de support (2), qui présente une surface (4) au moins partiellement gaufrée à l'aide d'un revêtement par transfert, en particulier sur du papier de séparation (20), **caractérisé en ce que** la couche de support (2) conformée comme une feuille de support (5) présente une plus grande élasticité que la couche de vernis (3) composée d'un polymère polymérisant sous l'action d'un rayonnement, en particulier d'un vernis UV (7), afin de réduire au moins partiellement les contraintes mécaniques.

2. Support plat selon la revendication 1, **caractérisé en ce que** la couche de vernis (3) comporte une base d'acryle, alkyle, époxy, polyester ou polyuréthane.

3. Support plat selon la revendication 1 ou 2, **caractérisé en ce que** la couche de vernis (3) est liée à la feuille de support (5) par solidarité de matière par l'intermédiaire d'un adhésif de contrecollage (10).

4. Support plat selon la revendication 1 ou 2, **caractérisé en ce que** la couche de vernis (3) se raccorde en solidarité de matière à la feuille de support (5).

5. Support plat selon l'une des revendications 1 à 4, **caractérisé en ce que** la couche de vernis (3) forme avec sa surface gaufrée (4) une surface (8) du support plat (1, 9).

6. Support plat selon l'une des revendications 1 à 4, **caractérisé en ce que** la couche de vernis (3) est contrecollée avec sa surface gaufrée (4) contre une feuille de couverture (16).

7. Support plat selon l'une des revendications 1 à 6, **caractérisé en ce que** la couche de vernis (3) présente au moins partiellement sur sa surface gaufrée (4) et/ou sur sa surface non gaufrée (11) une couche (12) d'un métal, d'un alliage métallique ou d'un composé métallique.

8. Support plat selon l'une des revendications 1 à 7, **caractérisé en ce qu'**un revêtement autocollant, thermosoudable ou cryosoudable (14) est appliqué sur la face de la feuille de support (5) tournée à l'opposé de la couche de vernis (3).

9. Support plat selon l'une quelconque des revendications précédentes, **caractérisé en ce que** des pigments à effets sont prévus au moins par zones entre la couche de vernis (3) et la feuille de support (5).

10. Procédé de fabrication d'un support plat (1, 9, 15), en particulier d'un lé décoratif, selon l'une des revendications 1 à 9, dans lequel une couche de vernis polymère (3) est appliquée sur toute la surface d'un papier de séparation (20) gaufré et durcie, la couche de vernis (3) ainsi gaufrée est assemblée avec une couche de support (2) et le papier de séparation est éventuellement retiré du support plat (1, 9, 15), **caractérisé en ce qu'**une couche de vernis (3) composée d'un polymère durcissable sous l'action d'un rayonnement est appliquée sur le papier de séparation (20) et soumise à un durcissement complet à l'aide d'un rayonnement UV ou d'un faisceau d'électrons et la couche de vernis (3) durcie est assemblée avec une couche de support (2) conformée comme une feuille de support (5).

11. Procédé selon la revendication 10, **caractérisé en ce que** la couche de vernis (3) gaufrée est revêtue au moins en partie, sur la face envers (11) non gaufrée, d'un métal, d'un alliage métallique ou d'un composé métallique.

12. Procédé selon la revendication 10 ou 11, **caractérisé en ce que** la couche de vernis (3) est contrecollée ou stratifiée avec sa face gaufrée (4) contre une feuille de couverture (16).

13. Procédé selon la revendication 10, 11 ou 12, **caractérisé en ce qu'**un revêtement autocollant, thermosoudable ou cryosoudable (14) est appliqué sur le support plat (9, 15).

14. Utilisation d'un support plat (1, 9, 15) selon l'une des revendications 1 à 9 comme étiquette décorative, étiquette de sécurité ou film décoratif pour des surfaces de meubles, des pièces en métal ou des pièces en plastique.
